# EUROPEAN PATENT SPECIFICATION

(11) **EP 2 328 292 B1**
(45) Date of publication and mention of the grant of the patent: **31.10.2012**
(21) Application number: 10191810.0
(22) Date of filing: 19.11.2010
(51) Int. Cl.: H04J 14/02

(54) **WDM channel extraction device**
WDM-Kanal-Extraktionsvorrichtung
Dispositif d'extraction de canaux WDM

(30) Priority: 30.11.2009 FR 0958503
(43) Date of publication of application: 01.06.2011
(73) Proprietor: Alcatel Lucent, 75007 Paris (FR)
(72) Inventor: Zami, Thierry, 91620, NOZAY (FR); Lemmonier, Nicolas, 91300 MASSY (FR)
(74) Representative: Sciaux, Edmond

(56) References cited:
- EP-A2- 2 063 563
- US-A1- 2009 067 845
- US-A1- 2009 226 168

## Description

The invention pertains to optical communication networks with spectral multiplexing of wavelength channels, known as Wavelength Division Multiplexing (WDM). The invention more particularly pertains to multichannel extraction systems.

A reception architecture is known for WDM systems which uses a cascade-connection made up of a signal demultiplexer on bands of wavelengths, 1xn couplers, and n coherent receivers at the output of these couplers (WO 2004/109958 A1). This reception architecture was proposed to reduce the number of filtering components by benefiting from the properties of coherent detection. This is because the opto-electronic sampling of the beats between the local oscillator and the channel to be detected creates a direct filtering, which, as a result, isolates said signals from the other channels carried by the other wavelengths. The use of a coherent receiver whose local oscillator's wavelength is tunable thereby makes it possible to filter and detect a channel regardless of its optical carrier frequency. This architecture is particularly advantageous for WDM systems comprising multiple bands of wavelength channels over gratings with different pitches.

According to one embodiment, the invention discloses a WDM channel extraction device comprising a tunable demultiplexer comprising one input for receiving a plurality of optical inputs over a plurality of wavelength channels, a plurality of receiving units, each receiving unit comprising a coupler and a plurality of tunable receivers connected to outputs of said coupler, said couplers each being connected to one respective output of said tunable demultiplexer, said tunable demultiplexer being capable of selectively letting one of said optical signals pass through to one of said respective outputs based on a command, characterized in that the receiving units of said plurality of receiving units comprise at least two different sizes, and that a communication unit is capable of receiving a piece of signal quality information associated with one of said optical signals, and of commanding said tunable demultiplexer to route said signal to a receiving unit exhibiting a size appropriate to said piece of signal quality information. Such an embodiment may particularly be used to construct an extraction device within a reconfigurable optical add-drop multiplexer, also known by the acronym ROADM.

According to one embodiment, the extraction device further comprises a second tunable demultiplexer comprising a second input for receiving a second plurality of optical signals at a plurality of waypoint channels, said couplers each being connected to one respective output of said second tunable demultiplexer, said second tunable demultiplexer being capable of selectively allowing one of said second optical signals through to one of said second respective outputs, said command unit being capable of receiving a piece of signal quality information associated with said second optical signal, and of commanding said second tunable demultiplexer to route said second signal to a receiving unit exhibiting a size appropriate to said piece of signal quality information. Such an embodiment may particularly be used to construct an extraction device of a multiple-input partially transparent optical node.

According to one embodiment, the command unit is capable of determining, based on the signal quality information, that the receiving of one of said signals by a first of the receiving units does not match a predetermined reception criteria, and selecting a second one of the receiving units as the receiving unit exhibiting an appropriate size in response to said detection, said second receiving unit exhibiting a size less than the size of the first receiving unit.

According to one embodiment, said inputs of the TD multiplexers are connected to respective extraction couplers located on two respective optical input channels.

According to one embodiment, the device comprises a quality-determination module connected to one of said tunable receivers, which is capable of determining said signal quality information based on the signal received by said tunable receiver.

According to one embodiment, said quality information comprises a binary error rate.

According to one embodiment, the extraction device comprises a quality-determination module connected to a network management device and capable of receiving said signal quality information from said network management device.

According to one embodiment, the extraction device comprises a padding source, said coupler of at least one receiving unit being connected to said padding source, said padding source being capable of transmitting at least one optical padding signal capable of being received by said plurality of tunable receivers of said at least one receiving unit.

A tunable demultiplexer may be constructed in various ways.

According to one particular embodiment, said tunable demultiplexer comprises a wavelength-selection switch (WSS).

A tunable demultiplexer generally requires localized or distributed signal demultiplexing means and localized or distributed signal spatial separation means. Each of these means many implement bulk optics or guided optics, or a combination of the two. The demultiplexing and spatial separation means may be fully or partially integrated, such as with integrated optics, using arrayed waveguide (AWG) networks.

According to one embodiment, said couplers comprise passive couplers.

According to one embodiment, said couplers comprise amplified couplers.

A tunable receiver may be constructed in various ways, such as in the form of a tunable filter and a photodiode. A tunable receiver may also be constructed using bulk optics or guided optics or a combination thereof. If it is constructed with integrated optics, the tunable receiver may be incorporated into other elements, such as a guided-optics optical coupler. According to one embodiment, said tunable receivers comprise at least one coherent receiver.

According to one embodiment, said padding signal source comprises the local oscillator of said at least one coherent receiver.

Embodiments may comprise more than one of the aforementioned characteristics in combination.

In current WDM networks, the number of WDM channels must be continually increased in order to increase the network's capacity. This, for example, may be obtained by choosing a smaller space between channels for an improved WDM network than for a previous WDM network, for example 50GHz instead of 10OGHz.

Some of the aspects of the invention are based on the observation that it is advantageous to use tunable demultiplexers, for example WSS demultiplexers, so as to introduce wavelength channel management flexibility into the WDM network. However, the number of outputs of tunable demultiplexers, for example those of the WSS type, remains limited. This number is currently about 9 outputs. Furthermore, the cost of tunable demultiplexers is much higher than that of couplers. It is therefore not desirable to increase the number of tunable demultiplexers to increase the capacity of such a WDM receiver.

One idea at the basis of some aspects of the invention is that to increase the detection capacity of a WDM receiver made of a cascade-connected demultiplexer and plurality of couplers, an economic solution is to allow more signals on wavelength channels through to a coupler and to increase the number of that coupler's outputs and the corresponding number of coherent receivers connected to that coupler.

Some aspects of the invention are also based on the observation that the optical noise on each output of a coupler increases with the number of wavelength channels received at that coupler's input. This is especially harmful to the detection of signals by coherent receivers. There is therefore a need to understand how to design the couplers to enable an increase in the number of channels detected, while being able to manage the problem of a higher optical noise each time a signal leaves a coupler when the number of channels received by these couplers is increased, and with it the number of those coupler's outputs.

The invention will be better understood, and other purposes, details, characteristics, and advantages thereof will become more clearly apparent upon examining the following description of multiple particular embodiments of the invention, which are given only by way of illustrative and non-limiting examples, with reference to the attached drawings.

In these drawings:
Figure 1 is a schematic functional depiction of an optical signal switching device exhibiting a diffusion/selection architecture.
Figure 2 is a schematic depiction of a WDM channel extraction device according to a first embodiment of the invention, which may particularly be used in the switching device of Figure 1.
Figure 3 is a schematic depiction of a first embodiment of the command algorithm for adjusting a tunable demultiplexer that may particularly be used in the devices of Figures 2 and 5.
Figure 4 is a schematic depiction of a second embodiment of the command algorithm for adjusting a tunable demultiplexer that may particularly be used in the devices of Figures 2 and 5.
Figure 5 is a schematic depiction of a WDM channel extraction device according to a second embodiment of the invention, which may particularly be used in the switching device of Figure 1.
Figure 6 is a schematic depiction of two variants of a coupler that may particularly be used in the extraction devices of Figures 2 and 5.
Figure 7 is a schematic depiction of one embodiment of a padding signal source.

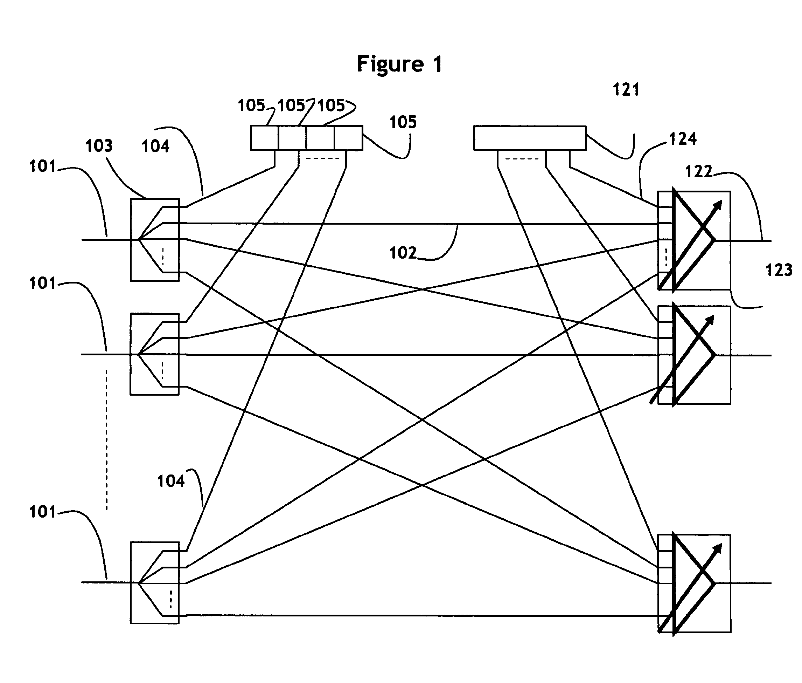

Shown in Figure 1 is an optical signal switching device exhibiting a diffusion/selection architecture making it possible to switch, insert, and extract optical signals on wavelength channels within an optical communication network. This multipath device comprises input paths 101 capable of receiving optical channel signals belonging to a grating of wavelength channels, for example, channels of a WDM (Wavelength Division Multiplexing) telecommunication system. These input paths are connected to power divider inputs 103, one output of which is connected to an extraction path 104 in order to extract signals from wavelength channels to extraction modules 105. Other outputs of power dividers 103 are connected by transfer paths 102 to inputs of tunable multiplexers 123. The tunable multiplexers 123 make it possible to selectively allow wavelength channel signals through to their outputs connected to output paths 122. An insertion module 121 makes it possible to insert wavelength channel signals via insertion paths 124 connected to other inputs of tunable multiplexers 123. These tunable multiplexers 123 make it possible to selectively allow through to their corresponding outputs 122 said inserted signals.

The device described in Figure 1 makes it possible to construct nodes of transparent optical networks, the signals being transferred onto the transfer paths 102 passing through the node without being turned into electrical signals at any time. Conversely, the signals extracted from the paths 104 undergo an optical/electrical conversion within the extraction modules 105. In the same way, the signals that need to be inserted onto the paths 124 undergo an inverse conversion, electrical/optical, within the insertion modules 121.

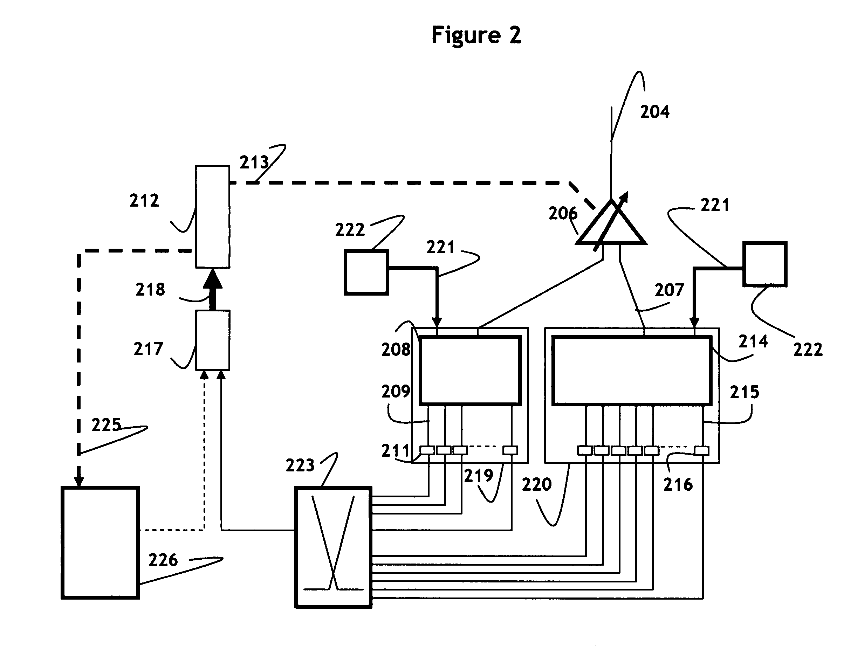

With reference to figure 2, we will now describe a signal extraction device that may be used to construct an extraction module 105 depicted in Figure 1. To illustrate this possibility, shown in Figure 2 is an extraction path 204 analogous to the extraction paths 104, such as those defined in Figure 1.

The extraction path 104, for example an optical fiber, is capable of receiving optical signals from channels belonging to a grating of WDM from a power divider 103. The number of wavelength channel signals received on the extraction path 104 is likely to change over time.

Figure 2 also depicts a tunable demultiplexer 206. In one preferred embodiment of the invention, the tunable demultiplexer 206 is a WSS (Wavelength Selective Switch). WSS tunable demultiplexers and their applications are described, among others, in US-A-2002/196520, WO-A-2004/015469, and S. MECHELS and al., IEEE Communication Magazine, March 2003, pp 88-94.

One of the demultiplexer's 206 outputs is connected by an optical link 207 to inputs of the coupler exhibiting one input and a whole number m₁ of outputs. Another output of the demultiplexer 206 is connected by another optical link 207 to the input of the coupler 214 exhibiting one input and a whole number m₂ of outputs. Other embodiments may comprise a greater number of couplers connected to the demultiplexer 206, for example multiple couplers having m₁ outputs and/or multiple couplers having m₂ outputs, limited by that demultiplexer's number of outputs

Other embodiments may use a greater number of types of couplers, for example three types of couplers characterized by whole numbers with different outputs m₁, m₂ and m₃. To simplify for the sake of explanation, we have detailed below, as depicted in Figure 2, an embodiment comprising a demultiplexer 206 having two outputs connected to two different types of couplers 208 and 214, respectively exhibiting m₁ and m₂ outputs, m₂ being strictly greater than m₁. The reason for using couplers 208 and 214 with different numbers of outputs m₁ and m₂ will be explained later on.

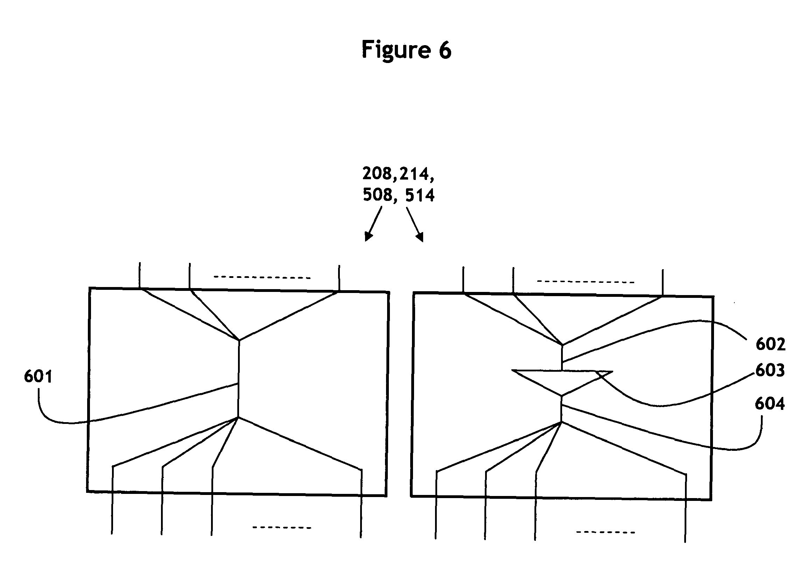

The power of a signal received at the input of the coupler 208 is distributed onto that coupler's m₁ output paths. The power of a signal received at the input of the coupler 214 is distributed onto that coupler's m₂ output paths. These distributions are essentially the same regardless of the wavelength channel associated with the site. In one preferred embodiment, a coupler 208 or 214 evenly distributes, within manufacturing tolerances, the power of a signal received at any one of its inputs to each of its output. Thus, if a signal is received at a wavelength channel λ1 at an input of a coupler 208, an approximately equal fraction of that signal will be at each of the coupler's 208 outputs. The same holds true for the coupler 214. However, said approximately equal fraction is lower for the coupler 214 than for the coupler 208 because m₂ is strictly greater than m₁. The couplers 208 and 214 may additionally consist of passive couplers or amplified couplers, as will be explained later on in relation to Figure 6.

All or some of the outputs of the coupler 208 are connected by optical links 209, for example by single-mode optical fibers, to corresponding tunable receivers 211. All or some of the outputs of the coupler 214 are connected by optical links 215, for example single-mode planar waveguides, to corresponding tunable receivers 216.

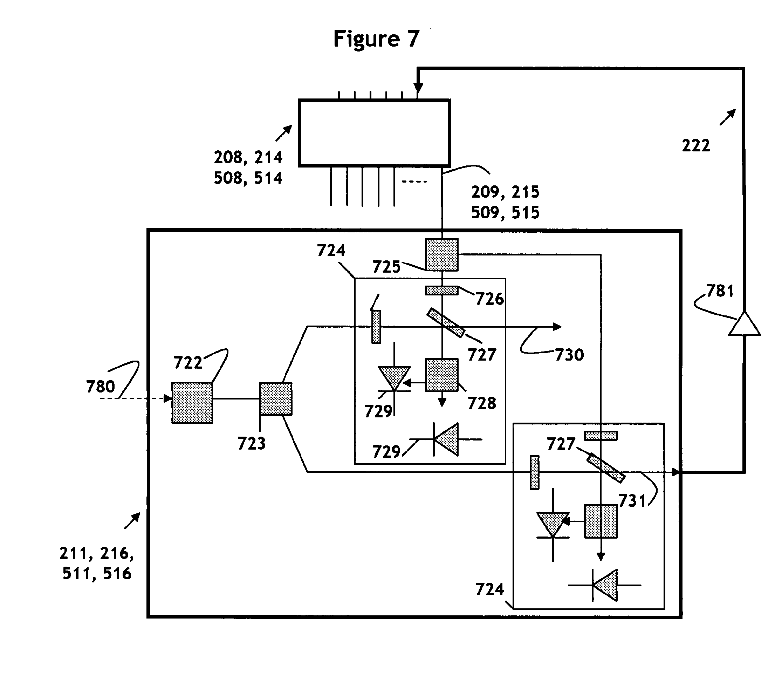

Such tunable receivers 211 and 216 may be constructed in multiple ways known to the person skilled in the art. For example, they may consist of a tunable wavelength channel filter, for example one using a Bragg grating, placed in front of a Positive-Intrinsic-Negative (PIN) photodiode. Another example embodiment, as will be described later on in relation to Figure 7, may consist of a coherent tunable receiver made up of a tunable local oscillator (for example, a wavelength-tunable laser) and a mixer for receiving at photodiodes, for example PIN photodiodes, beats between the local oscillator's signal and a signal transmitted by an output of the corresponding coupler 208, 214. Other types of tunable receivers are possible. The tunable receivers 211 and 216 are not necessarily identical.

Generally speaking, among the m₁ outputs of the coupler 208, q₁ of these outputs are connected to q₁ corresponding tunable receivers, q₁ being a whole number less than or equal to m₁. The situation in which q₁ is equal to m₁ corresponds to a situation of being maximally equipped with tunable receivers. Likewise, among the m₂ outputs of the coupler 214, q₂ of these outputs are connected to q₂ corresponding tunable receivers, q₂ being a whole number less than or equal to m₂. The situation in which q₂ is equal to m₂ corresponds to a situation of being maximally equipped with tunable receivers.

We will hereafter declare as the receiving unit 219 (respectively, 220) the assembly constituted by the coupler 208 (respectively, 214), optical links 209 (respectively, 215) and tunable receivers 211 (respectively, 216).

As mentioned above for couplers 208 and 214, Figure 2 shows for clarity's sake only a single receiving unit 219 and a single receiving unit 220. Other embodiments may contain one or more receiving units 208 and one or more receiving units 214, the numbers of these units not necessarily being equal, limited by the number of other outputs the demultiplexer 206 has.

We define the size of a receiving unit as the number of tunable receivers it has. The size is therefore also the number of different wavelength channel signals that this receiving unit is capable of demodulating at a given moment.

For example, let us consider a device analogous to that depicted in Figure 2, but comprising three receiving units, instead of 2 as depicted more simply in Figure 2. A first receiving unit 219 comprising a coupler 1x4 (m₁=4) and 2 tunable receivers (q₁ =2). A second receiving unit 219 comprising a coupler1x4 (m'₁ =4) and 4 tunable receivers (q'₁=4). A third receiving unit 220 comprising a coupler 1x16 (m₂=16) and 16 tunable receivers (q₂=16). In this situation, the three receiving units will have 3 different sizes, as they possess 3 different numbers of receivers. The receiving unit comprising 16 receivers is the largest one. The receiving unit comprising 2 receivers is the smallest one. The receiving unit comprising 4 detectors is the medium-sized one.

In a state of being maximally equipped with tunable receivers, each receiving unit comprises as many tunable receivers at its coupler has outputs. In this situation, the receiving unit becomes greater in size the larger the number of coupler outlets, meaning the number of tunable receivers, becomes.

The device of Figure 2 also possesses a signal quality determination module 217, capable of delivering signal quality information 218 to a command unit 212 so as to order the tuning of the tunable demultiplexer 216 via the command link 213.

The demultiplexer 206 comprises 2 outputs connected to 2 receiving units.

In one illustrative example, a receiving unit 219 contains one coupler 1x4 (m₁ =4) and 4 tunable receivers (q₁ =4) and the receiving unit 220 contains a coupler 1x16 (m₂=16) and 16 tunable receivers (q₂=16). The total number of tunable receivers is therefore 20.

In the chosen example, the demultiplexer 206 separates 18 signals from wavelength channels received on the extraction path 104. In order to carry out this separation, the demultiplexer 206 is first tuned to direct 16 of the signals to the large receiving unit 220. These 16 signals are received by the 16 tunable receivers that the large receiving unit 220 has. The tunable demultiplexer 206 is also tuned so that both of the remaining signals are transmitted to the second output of the demultiplexer 206, which is itself connected to the small receiving unit. These two signals may therefore be received by the two tunable receivers of the small unit 209.

In connection with this example, it is important to note that the error rate of a signal received by the large receiving unit 220 is affected by the optical noise generated by the 15 other optical signals received by the same receiving unit. This is because, as said, the receiving unit's coupler distributes the power of each of the 16 received signals to each of the coupler's 16 outputs in essentially even fashion. Additionally, a tunable receiver of the large unit 220 which needs to receive one signal from among 16 is imperfect. Thus, contrary to theory, it is not capable of totally filtering all of the other 15 signals received by said large receiving unit.

The signal quality determination module 217 makes it possible to verify that the 216 signals received at the large receiving unit 220 can be demodulated suitably, and to optimize the tuning of the tunable demultiplexer 206 if not.

According to a first variant implementation, the module 217 comprises a bit error rate (BER) detector. It is, for example, possible to successfully connect each of the 16 receivers to the module 217 using the switching board 223, in order to successfully measure 16 error rates corresponding to the 16 signals received by the large receiving unit.

The signal quality determination module 217 transmits to the command unit 212 signal quality information 218 indicating the bit error rate of all of the received signals. The command unit 212 compares these bit error rates to a determined threshold. Now let us consider the situation in which a signal on a wavelength channel received by the large receiving unit 220 is such that the error rate measured by the module 217 is too high compared to the predetermined threshold. The command unit 212 then commands, via the command link 213, a different tuning of the tunable demultiplexer 206 so that said signal of which the bit error rate is too high is redirected to the small receiving unit 219. According to what has previously been described, this unit comprises four tunable receivers, two of which are not used. One of these unused receivers may therefore be tuned to receive said signal which was redirected to the small receiving unit. A new bit error rate measurement may then be carried out by the module 217 for the same signal, this time received by a receiver of the small receiving unit. However, the optical noise generated by the three signals then present within the small receiving unit 219 is considerably lower than the optical noise which was present within the large receiving unit 220, because the noise within a receiving unit essentially increases with the number of signals received by that receiving unit. Additionally, the insertion losses of a coupler 1x4 are lower than those of a coupler 1x16. The bit error rate measured at the small receiving unit will therefore be considerably lower than the one measured for the same signal received by the large receiving unit 220. If the lower error rate received in this way is acceptable, said redirected signal will continue to be received by the small receiving unit 219. If the measured error rate, which is much lower, remains unacceptable, an alert message 225 may be sent by the module 212 to the network management device.

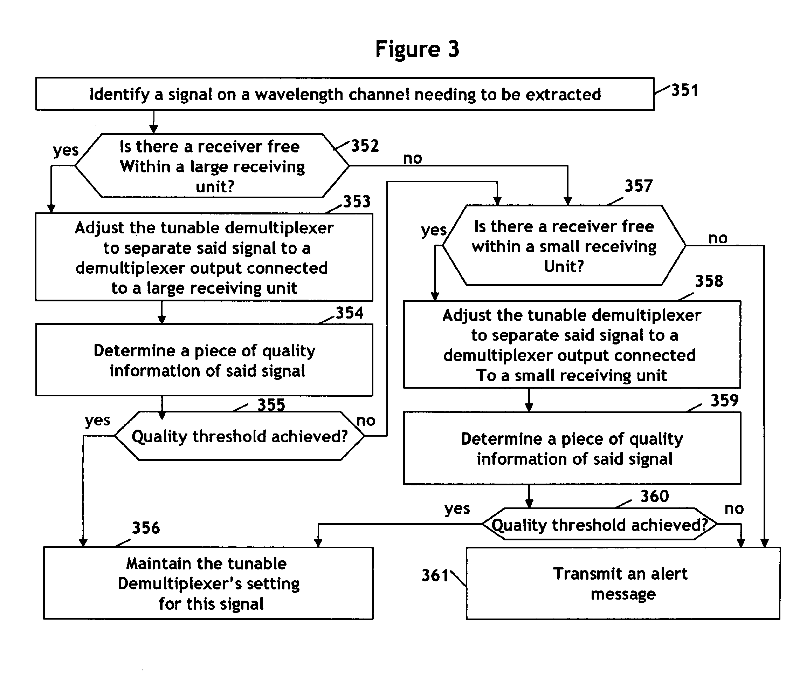

Figure 3 schematically depicts a flowchart of a command method that may be implemented by the command unit 212 in order to command the demultiplexer 206. During step 351, the command unit 212 identifies a signal on one wavelength channel that must be extracted. For example, this identification results from an instruction received from a network management system or a distributed control plane, which are not depicted. During step 352, an available receiver on the large unit is sought out. If such a receiver is available, step 353 consists of adjusting the tunable demultiplexer to direct said signal to the large receiving unit containing said available tunable receiver. During step 354, a quality indication (for example, a bit error rate) is obtained from the determination module 217 and is compared during step 355 with an acceptance threshold. If this threshold is reached, the adjustment of the tunable demultiplexer for said signal is confirmed in step 356. If the comparison in step 355 shows that this threshold has not been reached, in step 357 an available receiver on the small receiving unit is sought out. If such a receiver is not available, an alert message is sent during step 361 to indicate that the extraction device is not able to extract the signal that needs to be extracted. If such a receiver is available, the tunable demultiplexer is adjusted in step 358 to redirect said signal towards the small receiving unit containing said available tunable receiver. In step 359, a quality indication (for example, a bit error rate) is obtained again from the determination module 217 and is compared in step 360 to the acceptance threshold. If this threshold is reached, the adjustment of the tunable demultiplexer for this signal is confirmed in step 356. If this threshold is not reached, an alert message is sent in step 361. If in step 352, no tunable receiver is available at a large receiving unit, the method proceeds directly to step 357 and those which follow as previously indicated in the event that the response had been negative in step 355.

According to a second variant, the module 217 is capable of receiving information regarding the quality of each of the signals present on the reception path 104 from a control plane or a management plane of the network. This information is, for example, transmitted to the module 217 by the network management device 226, for example based on information collected in connection with the GMPLS (for Generalized Multiprotocol Label Switching) protocol together with the knowledge of the Quality of Transmission within the WDM optical network. For example, it is possible to associate the knowledge of the emissions characteristics of a signal and the knowledge of its degradation based on the path that it took within the network all the way to the extraction path 104. This makes it possible to predict an expected signal quality level for each signal present on the extraction path 104. This level constitutes a piece of signal quality information that the module 217 may provide to the command unit 212. The unit 212 may then command the tuning of the tunable demultiplexer 206 via the command link 213, to direct each signal by default towards the large module or small module sufficient for it to be properly detected based on the value indicative of its quality as expected at the input path 104. In the example given here, if more than four signals received at the channel 104 require reception at the small receiving unit 219, they will not all be receivable by the extraction device and an alert message can be sent by the module 207 to the network management device 226.

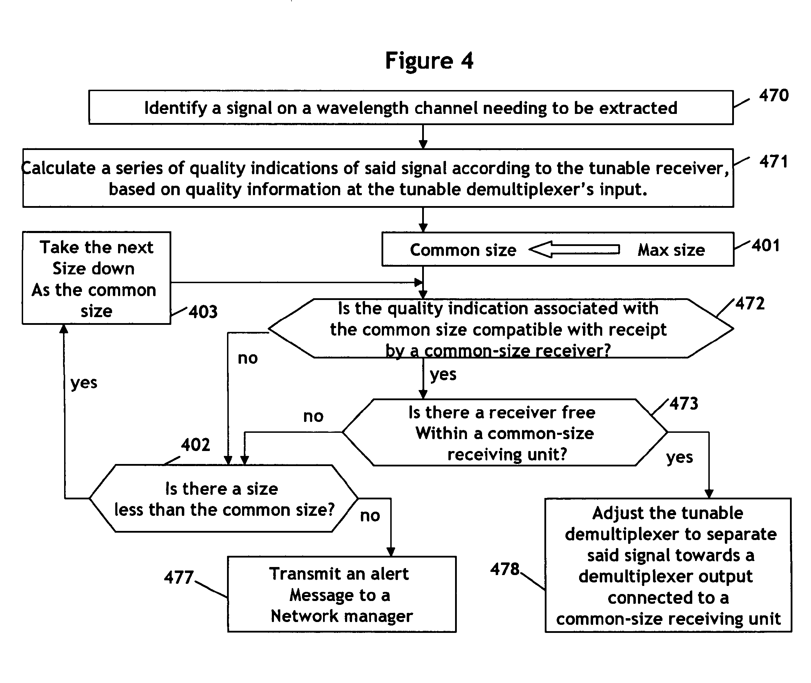

In connection with the second variant just described, Figure 4 schematically depicts a flow chart of another command method that may be implemented by the command unit 212 to command the demultiplexer 206. The method of Figure 4 comprises two main characteristics different from the method of Figure 3. The method of Figure 4 is iterative and applies to an extraction device exhibiting any number of different sizes for its receiving units. The method of Figure 4 determines the compatibility of the receiving unit's size as a function of the quality of the signal to be extracted using a predictive method, while the method of Figure 3 relies on after-the-fact detection. These two characteristics are functionally independent from one another.

In step 470, a tunable demultiplexer receives a signal on a wavelength channel. A piece of information on that signal's quality at the input of the demultiplexer is provided to the module 217 by a control plane or a management plane of the network. In step 471, said provided quality information is used by the module 217 to calculate a series of quality indications of that signal 218. This series of indications may, for example, consist of a series of binary error rates calculated for that signal as a function of the sizes of the extraction device's receiving units that may be used. The module 21 7 provides the series of calculated quality information 218 to the command module 212. In step 401, a "common size" variable is initialized at the largest size available among the receiving units. In step 472, the calculated quality indication 218 associated with the common size is compared to a threshold to determine whether said signal exhibits a sufficient quality to be detected at a common-sized receiving unit. If this is possible, the step 473 consists of seeking a tunable receiver available within a common-sized receiving unit. If such a receiver is available, the adjustable demultiplexer 205 is tuned in step 478 to direct said signal towards the common-sized receiving unit containing said available receiver.

If in step 472, the calculated signal quality is insufficient for detection by a common-sized receiving unit, the method moves on to step 402. Likewise, if in step 473 is observed that there is no receiver free within a common-sized receiving unit, the method moves on to step 402. If in step 402 is determined that there is a receiving unit smaller-sized than the common size, a common size equal to that smaller size is chosen in step 403. The method then resumes from step 472. If in step 402 it is determined that there is no smaller-sized receiving unit, the step 477 consists of sending an alert message to a network manager.

Other command methods besides those described in Figures 3 and 4 may be used to redirect a signal towards the appropriate-sized receiving unit.

Figure 2 also detects padding sources 220 for transmitting a padding signal 221 within each receiving unit. The padding signal 221 makes it possible to keep the optical noise constant within the receiving unit 219 or 220.

Let us consider the previous example in which the small-sized receiving unit 219 receives two optical signals and then three optical signals after a signal whose bit error rate was too high when it had been received by a large receiving unit is redirected towards the small receiving unit. Adding a third signal increases the optical noise within the small receiving unit compared to the initial situation in which it only received two signals. Consequently, if the bit error rate corresponding to the two channels initially received by the small receiving unit is measured again, these bit error rates will appear to have worsened compared to a bit error rate made before the third signal was added. This worsening may be such that one or both of the new bit error rates relating to these two signals exceed the acceptable threshold. New receivers must therefore be sought within the network to successfully receive one of these two signals or both of the signals. This situation constitutes a source of instability in allocating reception resources within the WDM optical network.

It is therefore useful to implement a method in which the bit error rate of a signal received by a receiving unit is not increased when the number of optical signals routed to that receiving unit increases. One solution consists of constantly correcting towards each receiving unit 219, 220 an optical padding signal whose power is adjusted so that the total optical power received by a receiving unit remains constant regardless of the number of optical signals that it receives from the demultiplexer 206. In the previous example, a padding signal 221 is emitted by a padding signal source code 222. The coupler 208 of the small receiving unit 219 is modified so as to possess two inputs. The previously described 1x4 coupler is therefore replaced by a 2x4 coupler. The padding signal 221 is received on the second input of that modified coupler 208. The two signals initially directed from the demultiplexer 2-6 to that small receiving unit are received on that coupler's first input. Whenever the third signal is redirected by a tunable demultiplexer towards the first input of the 2x4 coupler of the small receiving unit 219, the power of the padding signal 221 is intentionally decreased so as to keep the optical noise constant within the small receiving unit 219. Under these conditions, the bit error rates corresponding to the two initial signals remain roughly comparable to those initially determined in the presence of the padding signal 221 at its initial power. These bit error rates are not worsened, because the third optical signal had been received by the small receiving unit. One embodiment of the padding signal source 222 will be described later on in connection with Figure 7.

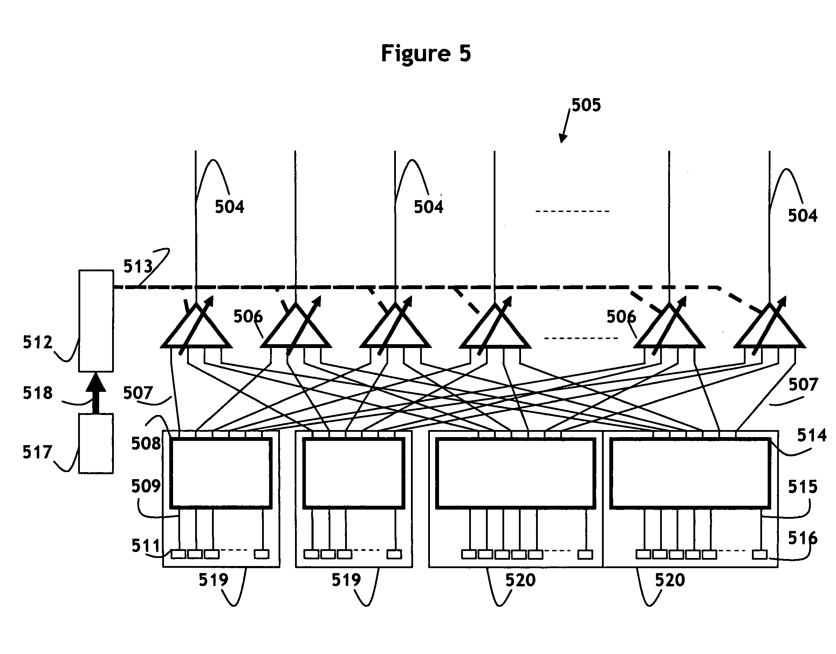

With reference to Figure 5, we will now describe a multipath extraction device that may be used, particularly as an extraction module in an optical signal switching device exhibiting a diffusion/selection architecture as depicted in Figure 1.

In Figure 5 the elements analogous or identical to those of Figure 2 have the same reference number, increased by 300.

Figure 5 schematically depicts a plurality of extraction paths 504, for example, single-mode optical fibers. These input paths are capable of receiving optical signals at channels belonging to a grating of WDM wavelength channels.

The wavelengths of the channels associated with the signals that the extraction paths 504 may receive are likely to change over time, for example under the control of a management system of the WDM network, not depicted in Figure 5. Thus, it may occur from time to time that there is no common channel associated with signals received at different inputs. On the contrary, at other times, it may occur that multiple extraction paths receive signals on a single channel. For example, at a certain moment, a first extraction path 504 may receive a signal on a wavelength channel λ1, and a second extraction channel 504 may receive a second signal on a second wavelength channel λ2. At that time, the signals carried by these two extraction paths will correspond to different channels. At another time, a third signal may appear on the second extraction path 504 on the wavelength channel λ1. At that time, the two extraction paths will carry two signals on the same channel λ1.

Figure 5 also depicts multiple tunable demultiplexers 506, for example WSS demultiplexers. An extraction path 504 is constructed, at the input of a corresponding demultiplexer 506.

The outputs of the demultiplexers 506 are connected to couplers 508 exhibiting n₁ inputs and m₁ outputs and to couplers 514 exhibiting n₂ inputs and m₂ outputs.

The power of a signal received at each of the n₁ inputs of a coupler 508 is distributed along the m₁ output paths of that coupler. The power of a signal received at each of the n₂ inputs of a coupler 514 is distributed along the m₂ output paths of that coupler. These distributions are essentially the same regardless of the wavelength channel associated with the site. In one preferred embodiment, a coupler 508 or 514 evenly distributes, within manufacturing tolerances, the power of a signal received at any one of its inputs to each of its outputs. Thus, if a signal is received on a wavelength channel λ1 at an input of a coupler 508 or 514, an approximately equal fraction of this signal is found at each of the outputs of the coupler 508 (or 514). The couplers 508 and 514 may additionally consist of passive couplers or amplified couplers, as will be explained later on with in connection with Figure 3.

Each of the outputs of a coupler 508 is connected by a second optical link 509, for example a single-mode optical fiber, to a corresponding tunable receiver 511. Each of the outputs of a coupler 514 is connected by a second optical link 515, for example a single-mode optical fiber, to a corresponding tunable receiver 516.

The reason for using couplers 508 and 514 with different numbers of ports is essentially the same as those described previously for couplers 208 and 214 in connection with Figure 2.

Figure 5 also depicts a command unit 512 making it possible to adjust, using command links 513, the tunable demultiplexers 506.

In Figure 5, a signal quality-determination module 517 is capable of delivering a piece of signal quality information 518 to the command unit 512. The module 517 functions in a fashion essentially similar to that of the module 217 described in connection with Figures 2, 3, and 4. The device of Figure 5 may therefore possess means not depicted, analogous to the switching board 223 and to the network management device 226 previously described in connection with Figure 2.

The device of Figure 5 exhibits two types of receiving units: small receiving units 519 and large receiving units 520. The size of the receiving units 519 and 520 is defined in a fashion analogous to the definition previously given for the receiving units 219 and 220.

In the embodiment depicted in Figure 5, for simplicity's sake, the number of couplers 508 is equal to two and the number of couplers 514 is equal to two.

Each of the couplers 508 and 514 is connected to all of the demultiplexers 506. Thus, the device depicted in Figure 5 has a property known by the general name "multidirectional", meaning that the receivers 511 and 516 are not assigned in a fixed manner to receive signals from certain particular extraction paths 504. On the contrary, each of the receivers 511 and 516 in Figure 5 makes it possible to receive a signal on a wavelength channel from any of the extraction paths 504. This is because if a wavelength channel signal is received by an extraction path 504, the demultiplexer 506 corresponding to that path may be adjusted so as to route that signal to any one of the couplers 508 or 514, and thereby to reach any of the tunable receivers 511 or 516 connected to outputs of corresponding couplers 508 or 514. The use of a tunable receiver 511 or 516 makes it possible to filter a signal over a single channel from among multiple wavelength channel signals present at the outputs of the corresponding coupler.

The device depicted in Figure 2 also possesses the known property of being "colorless." This means that each detector 511 or 516 is wavelength-tunable and may receive signals at different channels as a function of the channels received on the extraction paths 504 and the adjustment of the WSS demultiplexer located between that receiver and the corresponding input path.

The device depicted in Figure 5 makes it possible to at least partially resolve the conflict of wavelength channels. This is because if two channels are received simultaneously on the same wavelength channel on two extraction paths 504, and therefore by two corresponding demultiplexers 506, the command unit 512 may adjust these two demultiplexers via the link 513 so that these two signals are routed to distinct receiving units. In practice, this operation may be obtained by a method similar to that of Figure 4, wherein the availability of a receiver is determined in step 473 by also taking into account the wavelengths already present in the receiving unit.

The device's ability to resolve the wavelength conflict is relative to its sizing, particularly the number of receiving units. Preferentially, this number is greater than or equal to the number of extraction paths 504.

The insertion losses of n x m couplers are proportional to the logarithm of the greater of m and n. Consequently, because the insertion losses between the extraction paths 504 and the receivers 511, 516, and particularly those due to the presence of the couplers 508, 514, the power of the signal received by each receiver 511, 516 may be relatively low. These insertion losses are essentially constituted of the sum of the insertion losses of a demultiplexer 506 and a coupler 508, 514 and further losses.

The device described in Figure 5 may therefore advantageously use the active coupler schematically depicted in Figure 6 as 602, 603 and 604. At number 603 is an optical amplifying element inserted between an n x 1 coupler at number 602 and a 1x m divider at number 604. The coupler 603 or the divider 604 may be constructed using known technologies based on a single-mode optical fibers, silica-on-silicon, GalnAsP/lnP semiconductors, or other technologies. The amplifying elements may be a localized gain stage constructed by an optically pumped, erbium-doped fiber, or a GalnAsP/lnP semiconductor amplifier or other types of amplifiers, including distributed amplification technologies. For example, the n x 1 coupler at number 602, the coupling cross-section at number 603 and the 1 x m divisor at number 604 may be constructed based on optically pumped, single-mode erbium-doped optical fibers, thereby constructing a distributed-amplification structure.

Figure 7 depicts one advantageously embodiment of the padding source 222 as previously described in connection with Figure 2. In Figure 7, a tunable receiver 211, or 216 or 511 or 516 consists of a coherent receiver. This receiver comprises a tunable local oscillator 722, a coupler 723 for directing both halves of said tunable local oscillator's power to two identical 724 interferometers. A polarization separator 725 separates to or factional polarizations of an optical signal drawn from an optical link 209 or 215 or 509 or 515 respectively connected to an output of a coupler 208 or 214 or 508 or 514. Each interferometer 724 contains two quarter-wave blades 726, a semi-reflective blade 727, a polarization separator 728 and two photo-detectors 729.

The two semi-reflective blades 727 particularly define two optical signals 730 and 731 which are not used for coherent reception. Coherent perception actually uses complementary signals received by the four photo-receivers 729.

It is advantageously possible to use a signal coming from the local oscillator 722 to produce the padding signal 221 of Figure 2. This is depicted in Figure 7, in which the signal 731 plays the role of the signal 221 of the Figure 2 which is injected into an input of the coupler 208 or 214. This possibility particularly exists as long as the coherent receiver has not been used to detect an optical signal coming from the coupler. Figure 7 detects, at number 781, an optical gate, for example a GalnAsP/lnP semiconductor amplifier. The use of such an optical gate makes it possible to considerably overcome the crosstalk generated by the padding signal 731 when the photo-receivers 729 receive wavelength channel signals obtained from extraction paths 204 or 504. The padding signal 221 is produced by tuning the local oscillator 722 to another wavelength channel than the optical signals routed to the coupler to be detected. This local oscillator tuning may be controlled by the extraction device's command unit, as indicated by the arrow 780.

For sizing of extraction device according to Figure 2 or 5, relevant settings particularly include total capacity, express, for example, as a number of channels to be extracted, and the number of input paths. The greater than or equal to, and preferentially equal to, the number of input paths the device has. The number of receiving units is preferentially less than or equal to the number of outputs a demultiplexer has, and greater than or equal to the number of input paths. The size of the receiving units may be determined as a function of the total number of channels to be extracted and the number of units, as well as quality properties of signals expected at the node, if they can be determined. For example, for a uniform statistical distribution of signal qualities, the number of receiving units within each respective size category may be adjusted to obtain an equal total number of receivers within each size category.

Although the invention has been described in connection with multiple specific embodiments, it is naturally not in any way limited to them, and comprises all technical equivalents of the means described, as well as their combinations, if said combinations fall within the scope of the invention.

The use of the verb "comprise" or "include" and their conjugated forms does not exclude the presence of elements or steps other than those set forth in a claim. The use of the indefinite article "a" or "an" for an element or step does not, unless otherwise stated, excluded the presence of a plurality of such elements or steps. Multiple means or modules may be depicted by a single hardware element.

In the claims, any reference sign within parentheses should not be interpreted as limiting the claim.

## Claims

1. A WDM channel extraction device comprising:
a tunable demultiplexer (206) comprising one input for receiving a plurality of optical inputs over a plurality of wavelength channels,
a plurality of receiving units (219, 220), each receiving unit comprising a coupler and
a plurality of tunable receivers (208.214) connected to outputs of said coupler (211, 216), said couplers each being connected to one respective output of said tunable demultiplexer, said tunable demultiplexer (206) being capable of selectively letting one of said optical signals pass through to one of said respective outputs based on a command, and that a command unit (212) is capable of receiving a piece of signal quality information (218) associated with one of said optical signals, and of commanding said tunable demultiplexer to route said signal to a receiving unit exhibiting a size appropriate to said piece of signal quality information,
**characterized in that**
the receiving units of said plurality of receiving units (219, 220) comprise at least two different sizes, the sizes being defined by number of tunable receivers in the receiving units.

2. An extraction device according to claim 1, further comprising a second tunable demultiplexer comprising a second input for receiving a second plurality of optical signals at a plurality of wavelength channels,
said couplers each being connected to one respective output of said tunable demultiplexer,
said second tunable demultiplexer (206) being capable of selectively allowing one of said second optical signals through to one of said second respective outputs,
said command unit (217) being capable of receiving a piece of signal quality information associated with said second optical signal, and of commanding said second tunable demultiplexer to route said second signal to a receiving unit exhibiting a size appropriate to said piece of signal quality information.

3. An extraction device according to claim 1 or 2, **characterized by** the fact that the command unit (217) is capable of determining, based on the signal quality information, that the receiving of one of said signals by a first of the receiving units does not match a predetermined reception criteria, and selecting a second one of the receiving units as the receiving unit exhibiting an appropriate size in response to said detection, said second receiving unit exhibiting a size less than the size of the first receiving unit.

4. An extraction device according to claim 3, wherein
said inputs of the two demultiplexers are connected to two respective extraction couplers (103) located on two respective optical input paths (101).

5. An extraction device according to one of the claims 1 to 4, **characterized by** the fact that it comprises a quality-determination module (217) connected to one of said tunable receivers (211, 216) and which is capable of determining said signal quality information based on the signal received by said tunable receiver.

6. An extraction device according to claim 5, **characterized by** the fact that said quality information comprises a binary error rate.

7. An extraction device according to one of the claims 1 to 4, **characterized by** the fact that it comprises a quality-determination module (217) connected to a network management device (226) and capable of receiving said signal quality information from said network management device.

8. An extraction device according to one of the claims 1 to 7, **characterized by** the fact that it comprises a padding source (222),
said coupler (208, 214) of at least one receiving unit being connected to said padding source, said padding source being capable of transmitting at least one optical padding signal (221) capable of being received by said plurality of tunable receivers (211, 216) of said at least one receiving unit.

9. An extraction device according to one of the claims 1 to 8, **characterized by** the fact that said tunable demultiplexer comprises a wavelength selection switch.

10. An extraction device according to one of the claims 1 to 9, **characterized by** the fact that said couplers comprise passive couplers (601).

11. An extraction device according to one of the claims 1 to 9, **characterized by** the fact that said couplers comprise amplified couplers (602, 603, 604)

12. An extraction device according to one of the claims 1 to 11, **characterized by** the fact that said tunable receivers comprise at least one coherent receiver.

13. An extraction device according to the claims 8 and 12 taken in combination, wherein said padding signal source comprises the local oscillator (722) of said at least one coherent receiver.

## Patentansprüche

1. WDM-Kanal-Extraktionsvorrichtung, umfassend:
Einen abstimmbaren Demultiplexer (206) mit einem Eingang für den Empfang einer Vielzahl von optischen Eingaben über eine Vielzahl von Wellenlängenkanälen,
eine Vielzahl von Empfangseinheiten (219, 220), wobei jede Empfangseinheit einen Koppler und eine Vielzahl von an die Ausgänge des besagten Kopplers (211, 216) angeschlossenen abstimmbaren Empfängern (208.214) umfasst, wobei die besagten Koppler jeweils an einen entsprechenden Ausgang des besagten abstimmbaren Demultiplexers angeschlossen sind, wobei der besagte abstimmbare Demultiplexer (206) fähig ist, auf der Basis eines Befehls selektiv eines der besagten optischen Signale an einen der besagten entsprechenden Ausgänge durchzulassen, und wobei ein Befehlsgeber (212) fähig ist, eine mit einem der besagten optischen Signale assoziierte Signalqualitätsinformation (218) zu empfangen und dem besagten abstimmbaren Demultiplexer zu befehlen, das besagte Signal an eine Empfangseinheit mit einer für die besagte Signalqualitätsinformation geeigneten Größe zu routen,
**dadurch gekennzeichnet, dass**
die Empfangseinheiten der besagten Vielzahl von Empfangseinheiten (219, 220) mindestens zwei unterschiedliche Größen aufweisen, wobei die Größen durch eine Anzahl von abstimmbaren Empfängern in den Empfangseinheiten definiert werden.

2. Extraktionsvorrichtung nach Anspruch 1, weiterhin umfassend einen zweiten abstimmbaren Demultiplexer mit einem zweiten Eingang für den Empfang einer zweiten Vielzahl von optischen Signalen mit einer Vielzahl von Wellenlängenkanälen,
wobei die besagten Koppler jeweils an einen entsprechenden Ausgang des besagten abstimmbaren Demultiplexers angeschlossen sind,
wobei der besagte zweite abstimmbare Demultiplexer (206) fähig ist, eines der besagten zweiten optischen Signale an einen der besagten zweiten entsprechenden Ausgänge durchzulassen,
wobei der besagte Befehlsgeber (217) fähig ist, eine mit dem besagten zweiten optischen Signal assoziierte Signalqualitätsinformation zu empfangen und dem besagten zweiten abstimmbaren Demultiplexer zu befehlen, das besagte zweite Signal an eine Empfangseinheit mit einer für die besagte Signalqualitätsinformation geeigneten Größe zu routen.

3. Extraktionsvorrichtung nach Anspruch 1 oder 2, **dadurch gekennzeichnet, dass** der Befehlsgeber (217) fähig ist, auf der Basis der Signalqualitätsinformation zu erkennen, dass der Empfang eines der besagten Signale an einer ersten der Empfangseinheiten nicht einem vorbestimmten Empfangskriterium entspricht, und in Reaktion auf das besagten Erkennen eine zweite der Empfangseinheiten als diejenige Empfangseinheit, die eine geeignete Größe aufweist, auszuwählen, wobei die Größe der besagten zweiten kleiner als die Größe der ersten Empfangseinheit ist.

4. Extraktionsvorrichtung nach Anspruch 3, wobei
die besagten Eingänge der beiden Demultiplexer an zwei entsprechende, auf zwei entsprechenden optischen Eingangspfaden (101) angeordnete Extraktionskoppler (103) angeschlossen sind.

5. Extraktionsvorrichtung nach einem der Ansprüche 1 bis 4, **dadurch gekennzeichnet, dass** sie ein Qualitätsbestimmungsmodul (217) umfasst, welches an einen der besagten abstimmbaren Empfänger (211, 216) angeschlossen und fähig ist, die besagte Signalqualitätsinformation auf der Basis des an dem besagten abstimmbaren Empfänger empfangenen Signals zu bestimmen.

6. Extraktionsvorrichtung nach Anspruch 5, **dadurch gekennzeichnet, dass** die besagte Qualitätsinformation eine Binärfehlerrate umfasst.

7. Extraktionsvorrichtung nach einem der Ansprüche 1 bis 4, **dadurch gekennzeichnet, dass** sie ein Qualitätsbestimmungsmodul (217) umfasst, welches an eine Netzwerkverwaltungsvorrichtung (226) angeschlossen und fähig ist, die besagte Signalqualitätsinformation von der besagten Netzwerkverwaltungsvorrichtung zu empfangen.

8. Extraktionsvorrichtung nach einem der Ansprüche 1 bis 7, **dadurch gekennzeichnet, dass** sie eine Padding-Quelle (222) umfasst,
wobei der besagte Koppler (208, 214) mindestens einer Empfangseinheit an die besagte Padding-Quelle angeschlossen ist, wobei die besagte Padding-Quelle fähig ist, mindestens ein optisches Padding-Signal (221), welches an der besagten Vielzahl von abstimmbaren Empfängern (211, 216) der besagten mindestens einen Empfangseinheit empfangen werden kann, zu übertragen.

9. Extraktionsvorrichtung nach einem der Ansprüche 1 bis 8, **dadurch gekennzeichnet, dass** der besagte abstimmbare Demultiplexer einen Wellenlängenwahlschalter umfasst.

10. Extraktionsvorrichtung nach einem der Ansprüche 1 bis 9, **dadurch gekennzeichnet, dass** die besagten Koppler passive Koppler (601) umfassen.

11. Extraktionsvorrichtung nach einem der Ansprüche 1 bis 9, **dadurch gekennzeichnet, dass** die besagten Koppler verstärkte Koppler (602, 603, 604) umfassen.

12. Extraktionsvorrichtung nach einem der Ansprüche 1 bis 11, **dadurch gekennzeichnet, dass** die besagten abstimmbaren Empfänger mindesten einen kohärenten Empfänger umfassen.

13. Extraktionsvorrichtung nach einer Kombination der Ansprüche 8 und 12, wobei die besagte Padding-Signalquelle den lokalen Oszillator (722) des besagten mindestens einen kohärenten Empfängers umfasst.

## Revendications

1. Dispositif d'extraction de canaux WDM comprenant :
un démultiplexeur réglable (206) comprenant une entrée pour recevoir une pluralité d'entrées optiques par le biais d'une pluralité de canaux de longueur d'onde,
une pluralité d'unités de réception (219, 220), chaque unité de réception comprenant un coupleur et une pluralité de récepteurs réglables (208.214) connectés aux sorties dudit coupleur (211, 216), lesdits coupleurs étant chacun connectés à une sortie respective dudit démultiplexeur réglable, ledit démultiplexeur réglable (206) pouvant sélectivement faire transférer l'un desdits signaux optiques à l'une desdites sorties respectives en fonction d'une commande, et qu'une unité de commande (212) peut recevoir un fragment d'information de qualité de signal (218) associé à l'un desdits signaux optiques, et
commander ledit démultiplexeur réglable pour router ledit signal vers une unité de réception présentant une taille appropriée audit fragment d'information de qualité de signal,
**caractérisé en ce que**
les unités de réception de ladite pluralité d'unités de réception (219, 220) comprennent au moins deux tailles différentes, les tailles étant définies par un nombre de récepteurs réglables dans les unités de réception.

2. Dispositif d'extraction selon la revendication 1, comprenant en outre un second démultiplexeur réglable comprenant une seconde entrée pour recevoir une seconde pluralité de signaux optiques au niveau d'une pluralité de canaux de longueur d'onde, lesdits coupleurs étant chacun connectés à une sortie respective dudit démultiplexeur réglable,
ledit second démultiplexeur réglable (206) pouvant sélectivement permettre de transférer l'un desdits seconds signaux optiques à l'une desdites secondes sorties respectives, ladite unité de commande (217) pouvant recevoir un fragment d'information de qualité de signal associé audit second signal optique, et commander ledit second démultiplexeur réglable pour router ledit second signal vers une unité de réception présentant une taille appropriée audit fragment d'information de qualité de signal.

3. Dispositif d'extraction selon la revendication 1 ou 2, **caractérisé en ce que** l'unité de commande (217) peut déterminer, en fonction des informations de qualité de signal, que la réception de l'un desdits signaux par une première des unités de réception ne correspond pas à un critère de réception prédéterminé, et la sélection d'une seconde des unités de réception comme l'unité de réception présentant une taille appropriée en réponse à ladite détection, ladite seconde unité de réception présentant une taille inférieure à celle de la première unité de réception.

4. Dispositif d'extraction selon la revendication 3, selon lequel lesdites entrées des deux démultiplexeurs sont connectées à deux coupleurs d'extraction (103) situés sur deux chemins respectifs (101) d'entrée optique.

5. Dispositif d'extraction selon l'une quelconque des revendications 1 à 4, **caractérisé en ce qu'**il comprend un module de détermination de qualité (217) connecté à l'un desdits récepteurs réglables (211, 216) et peut déterminer lesdites informations de qualité de signal en fonction du signal reçu par ledit récepteur réglable.

6. Dispositif d'extraction selon la revendication 5, **caractérisé en ce que** lesdites informations de qualité comprennent un taux d'erreur binaire.

7. Dispositif d'extraction selon l'une quelconque des revendications 1 à 4, **caractérisé en ce qu'**il comprend un module de détermination de qualité (217) connecté à un dispositif de gestion de réseau (226) et peut recevoir lesdites informations de qualité de signal dudit dispositif de gestion de réseau.

8. Dispositif d'extraction selon l'une quelconque des revendications 1 à 7, **caractérisé en ce qu'**il comprend une source de remplissage (222),
ledit coupleur (208, 214) d'au moins une unité de réception étant connecté à ladite source de remplissage, ladite source de remplissage pouvant transmettre au moins un signal de remplissage optique (221) pouvant être reçu par ladite pluralité de récepteurs réglables (211, 216) de ladite au moins une unité de réception.

9. Dispositif d'extraction selon l'une quelconque des revendications 1 à 8, **caractérisé en ce que** ledit démultiplexeur réglable comprend un commutateur de sélection de longueur d'onde.

10. Dispositif d'extraction selon l'une quelconque des revendications 1 à 9, **caractérisé en ce que** lesdits coupleurs comprennent des coupleurs passifs (601).

11. Dispositif d'extraction selon l'une quelconque des revendications 1 à 9, **caractérisé en ce que** lesdits coupleurs comprennent des coupleurs amplifiés (602, 603, 604).

12. Dispositif d'extraction selon l'une quelconque des revendications 1 à 11, **caractérisé en ce que** lesdits démultiplexeurs réglables comprennent au moins un récepteur cohérent.

13. Dispositif d'extraction selon les revendications 8 et 12 associées, selon lequel ladite source de signal de remplissage comprend l'oscillateur local (722) dudit au moins un récepteur cohérent.
